# FASCICULE DE BREVET EUROPEEN

(11) **EP 3 044 622 B1**
(45) Date de publication et mention de la délivrance du brevet: **30.08.2017**
(21) Numéro de dépôt: 14758597.0
(22) Date de dépôt: 10.07.2014
(51) Int. Cl.: G02B 7/182, G02B 23/16

(54) **SUPPORT DE MIROIR SECONDAIRE POUR TELESCOPE**
SEKUNDÄRSPIEGELSTÜTZE FÜR EIN TELESKOP
SECONDARY MIRROR SUPPORT FOR A TELESCOPE

(30) Priorité: 12.09.2013 FR 1302128
(43) Date de publication de la demande: 20.07.2016
(73) Titulaire: Safran Electronics & Defense, 92100 Boulogne-Billancourt (FR)
(72) Inventeur: FURUI, Christophe, F-92100 Boulogne-Billancourt (FR)
(74) Mandataire: Cabinet Plasseraud
(86) Numéro de dépôt international: PCT/FR2014/051776
(87) Numéro de publication internationale: WO 2015/036665

(56) Documents cités:
- US-A- 4 927 252
- US-A1- 2005 141 112
- US-A1- 2013 208 367

## Description

La présente invention concerne un support de miroir secondaire pour télescope, ainsi qu'un télescope qui comprend un tel support.

Certaines applications nécessitent de monter une optique d'imagerie sur un dispositif à orientation variable, qui est capable de guider en site et en azimut une ligne de visée de l'optique d'imagerie. Couramment, une optique dioptrique, c'est-à-dire une optique qui est exclusivement à base de lentilles, est utilisée pour de telles applications, car les dimensions de telles optiques à lentilles sont compatibles avec les contraintes d'intégration dans le dispositif à orientation variable.

Néanmoins, certaines applications d'observation et de détection multi-spectrales et/ou à haute résolution nécessitent d'utiliser des optiques catadioptriques, de type télescope à miroirs, à la place d'optiques dioptriques. En effet, de telles optiques catadioptriques ne présentent pas de dispersion spectrale et peuvent être plus légères que des optiques à lentilles à dimension égale de pupille. D'autre part, pour des diamètres de pupille qui sont supérieurs à 100 mm (millimètre), la faisabilité d'optiques dioptriques devient problématique, pour des raisons de masse et d'encombrement. De façon connue, un tel télescope peut comprendre les éléments suivants :
- un miroir primaire ;
- un miroir secondaire, qui est plus petit que le miroir primaire ; et
- un support qui est assemblé rigidement au miroir primaire et au miroir secondaire de façon à maintenir le miroir secondaire en avant d'une zone centrale du miroir primaire, avec des faces réfléchissantes respectives des deux miroirs primaire et secondaire qui sont tournées l'une vers l'autre.

Or les applications envisagées pour un tel télescope peuvent nécessiter une qualité d'image élevée, et aussi nécessiter de contrôler sa ligne de visée avec une grande précision. Ces exigences requièrent à leur tour de réduire le plus possible des déformations involontaires qui seraient susceptibles d'affecter le miroir primaire, le support, ainsi que le miroir secondaire. En particulier, certaines déformations qui affectent le support peuvent modifier la direction de la ligne de visée du télescope. Tel est le cas des déformations du support qui altèrent la position angulaire relative des deux miroirs primaire et secondaire l'un par rapport à l'autre.

De plus, des déformations dynamiques du télescope sont provoquées par des vibrations d'origine externe qui sont transmises aux éléments du télescope. Tel est le cas, par exemple, pour un télescope qui est embarqué à bord d'un hélicoptère : la rotation des rotors de l'hélicoptère produit des vibrations à basse fréquence, dont les fréquences fondamentales et celles des premières harmoniques sont inférieures à 100 Hz (hertz). Les modes propres de déformation du télescope doivent alors présenter des fréquences qui sont très supérieures à celle des vibrations externes, pour éviter que ces dernières ne provoquent pour le télescope des déformations par vibration qui aient des amplitudes nuisibles à la stabilité de la ligne de visée.

Dans des télescopes connus avant la présente invention, le support qui maintient le miroir secondaire possède une structure tripode, avec trois pieds de cette structure qui sont fixés à proximité du bord périphérique du miroir primaire, sur le miroir primaire lui-même ou sur un élément de base du télescope. Un télescope suivant l'art antérieure est divulgué dans le document US 2005/ 141112 A1.

A partir de cette situation, un but de l'invention consiste à fournir un support de miroir secondaire pour télescope, qui présente des déformations réduites.

Plus particulièrement, l'invention a pour but de fournir un tel support avec lequel la position angulaire relative des deux miroirs primaire et secondaire varie dans une mesure réduite.

Encore plus particulièrement, un but de l'invention est de réduire l'amplitude de déformations dynamiques du support qui produisent des variations d'inclinaison en sens opposés pour les deux miroirs.

L'invention a aussi pour but de fournir un télescope qui soit adapté pour être utilisé à bord d'un hélicoptère en vol. Notamment, une réduction des déformations dynamiques du télescope est recherchée pour les fréquences de vibration qui correspondent au fonctionnement des rotors de l'hélicoptère.

Pour atteindre ces buts ou d'autres, un premier aspect de l'invention propose un support pour maintenir rigidement un miroir secondaire en avant d'une zone centrale d'un miroir primaire au sein d'un télescope, le miroir secondaire étant plus petit que le miroir primaire, ce support comprenant :
- trois pieds, qui sont destinés à être reliés rigidement au miroir primaire en dehors de la zone centrale de celui-ci, les trois pieds étant répartis angulairement autour de cette zone centrale ;
- une couronne externe, qui est destinée à être reliée au miroir secondaire, et qui possède un axe de symétrie par rotation perpendiculaire à cette couronne externe ;
- au moins trois jambes, qui aboutissent chacune à l'un des trois pieds, et qui sont chacune inclinée par rapport à l'axe de la couronne externe ; et
- au moins trois jonctions, qui sont séparées angulairement le long de la couronne externe, et qui connectent chacune rigidement la couronne externe à une extrémité supérieure d'une des jambes, opposée au pied auquel aboutit cette jambe.

Selon l'invention, chaque jambe du support possède une courbure non nulle, qui est orientée de sorte qu'une concavité de cette jambe soit tournée à l'opposé de la zone centrale du miroir primaire lorsque les pieds sont reliés à ce miroir primaire.

Grâce à une telle courbure de chaque jambe du support et à l'orientation de la concavité qui y est associée, les déformations du support qui modifient la position angulaire relative des deux miroirs primaire et secondaire, ont des amplitudes qui sont réduites. Autrement dit, les deux miroirs ont des orientations respectives qui sont moins susceptibles de varier l'une par rapport à l'autre. La ligne de visée du télescope peut alors être mieux contrôlée, car elle est moins altérée par des déformations du support qui maintient le miroir secondaire en avant du miroir primaire.

Préférablement, le support peut être formé en une pièce unique, constituée d'un seul matériau solide qui est continu entre les pieds, les jambes, les jonctions et la couronne externe.

Dans des réalisations préférées de l'invention, chaque jambe peut posséder une section transversale qui diminue à partir d'une zone de cette jambe proche du pied auquel aboutit la même jambe, en direction de la jonction qui connecte cette jambe à la couronne externe. Le support présente alors une masse totale qui est réduite, permettant d'augmenter en conséquence la fréquence des modes propres de vibration par déformation du support. Ces fréquences des modes propres du support peuvent ainsi être supérieures aux fréquences des vibrations qui sont transmises au télescope par des sources vibrantes externes, si bien que les déformations du télescope qui sont causées par ces sources vibrantes externes ont des amplitudes réduites. En particulier, la fréquence la plus faible de tels modes propres du support peut être supérieure à 600 Hz environ, si bien que le télescope est particulièrement adapté pour être utilisé à bord d'un hélicoptère en vol.

En outre, une telle diminution de la section transversale de chaque jambe du support en direction du miroir secondaire permet de réduire la partie de la masse du télescope qui est déportée en avant du miroir primaire. Ainsi, les déformations du support au sein du télescope lorsque le télescope est soumis à des accélérations variables, ou sous l'effet de la gravité pour des orientations variables du télescope, sont réduites.

Possiblement, la section transversale de chaque jambe peut diminuer entre la zone qui est proche du pied auquel aboutit la jambe et la jonction qui connecte cette même jambe à la couronne externe, de sorte qu'une contrainte existant dans la section transversale soit constante pour des niveaux de la section transversale qui sont variables entre la zone proche du pied et la jonction à la couronne externe.

Possiblement aussi, chaque jambe peut posséder une épaisseur qui est constante entre la zone proche du pied auquel aboutit la jambe et la jonction qui connecte cette même jambe à la couronne externe.

Préférablement, les trois jambes peuvent être séparées angulairement deux-à-deux autour de l'axe de la couronne externe, avec des angles de séparation qui sont compris entre 100° et 140° autour de l'axe.

Dans certaines réalisations de l'invention, le support de miroir secondaire peut comprendre :
- six jambes, qui aboutissent par paires à chacun des trois pieds ; et
- six jonctions, qui sont séparées angulairement le long de la couronne externe, et qui connectent chacune rigidement la couronne externe à l'extrémité supérieure d'une des six jambes, opposée au pied auquel aboutit cette jambe.

De façon générale pour un support conforme à l'invention, chaque jambe peut posséder un rayon de courbure moyen qui est compris entre 80 mm et 140 mm. Dans de telles réalisations du support, une arête supérieure de chaque jambe, qui est tournée à l'opposé de la zone centrale du miroir primaire lorsque les pieds sont reliés à ce miroir primaire, peut posséder un rayon de courbure compris entre 100 mm et 140 mm. Simultanément, une arête inférieure de chaque jambe, qui est tournée vers la zone centrale du miroir primaire lorsque les pieds sont reliés au miroir primaire, peut posséder un rayon de courbure qui est compris entre 80 mm et 110 mm. Les centres de courbure des deux arêtes supérieure et inférieure de chaque jambe sont situés d'un côté de cette jambe qui est opposé à la zone centrale du miroir primaire.

Préférablement, l'orientation de la concavité associée à la courbure de chaque jambe peut être constante le long de cette jambe.

Un second aspect de l'invention propose un télescope à faibles déformations qui comprend :
- un miroir primaire ;
- un miroir secondaire qui est plus petit que le miroir primaire ; et
- un support qui est conforme au premier aspect de l'invention.

Dans un tel télescope, le support est assemblé rigidement au miroir primaire et au miroir secondaire de façon à maintenir ce dernier en avant de la zone centrale du miroir primaire, avec les faces réfléchissantes respectives des deux miroirs primaire et secondaire qui sont tournées l'une vers l'autre.

Un tel télescope présente alors des déformations qui sont faibles. En particulier, l'orientation relative des deux miroirs varie dans une mesure qui est réduite sous l'effet de vibrations provenant de l'extérieur du télescope, si bien que la direction de la ligne de visée du télescope peut être contrôlée très précisément.

En particulier, le télescope présente des déformations dynamiques qui sont réduites lorsqu'il est soumis à des vibrations d'origine externe dont les fréquences sont inférieures à 100 Hz. Pour cette raison, un télescope qui est conforme au second aspect de l'invention est particulièrement adapté pour être embarqué à bord d'un hélicoptère.

Ces caractéristiques et avantages de l'invention sont maintenant décrits en détail en référence aux figures suivantes, qui illustrent des modes de réalisation non limitatifs :

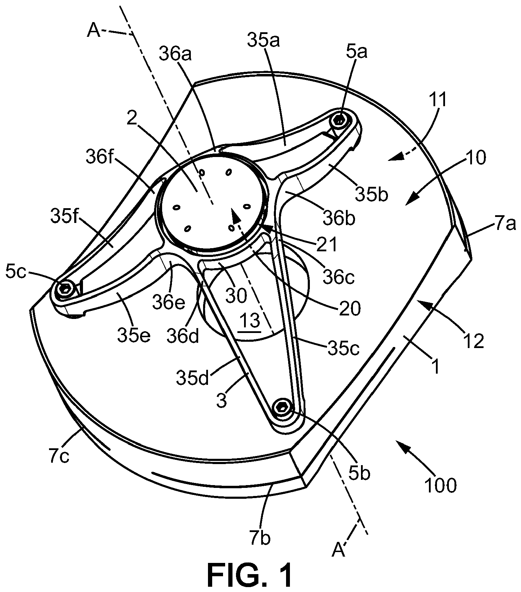

- La Figure 1 est une vue en perspective d'un télescope selon l'invention ;
- les Figures 2 et 3 sont respectivement une vue éclatée et une vue de face du télescope de la Figure 1 ;
- la Figure 4 est une vue partielle en coupe d'un support interne au télescope des Figures 1 à 3 ; et

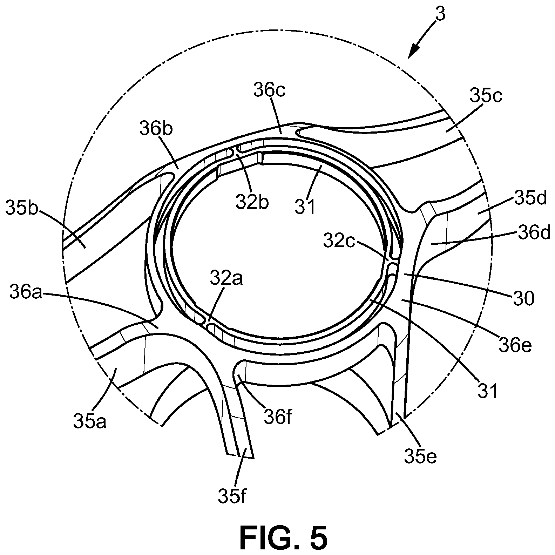

- La Figure 5 est une vue en perspective d'une partie centrale du support de la Figure 4.

Pour raison de clarté, les dimensions qui apparaissent dans ces figures ne correspondent ni à des dimensions réelles, ni à des rapports réels de dimensions. En outre, des références numériques identiques qui sont indiquées dans plusieurs de ces figures désignent des éléments identiques ou qui ont des fonctions identiques.

Le télescope 100 comprend un miroir primaire 1, un miroir secondaire 2, un support 3 et des éléments de connexion qui seront détaillés plus loin.

Le miroir primaire 1 comporte une face antérieure 10 à fonction de miroir, une face postérieure 11, et un bord périphérique externe 12 qui relie latéralement les faces 10 et 11. De façon connue, le miroir 1 peut comporter une ouverture centrale 13, et la face postérieure 11 peut comporter une structure alvéolaire. Cette structure alvéolaire réalise un compromis entre une masse du miroir primaire 1 qui est limitée et une raideur du miroir qui est élevée.

Le miroir secondaire 2 possède une face antérieure 20 à fonction de miroir, et un bord périphérique 21 qui peut être avantageusement circulaire. Le miroir secondaire 2 est plus petit en diamètre que le miroir primaire 1.

Le support 3 maintient rigidement le miroir 2 au dessus de la face antérieure 10 du miroir 1, par exemple dans une position qui est centrée et de sorte que les axes optiques respectifs des miroirs 1 et 2 soient superposés. Toutefois, l'invention n'est pas limitée à cette configuration géométrique et optique particulière. Les deux miroirs 1 et 2 sont maintenus par le support 3 de sorte que leurs faces réfléchissantes respectives 10 et 20 soient tournées l'une vers l'autre. De cette façon, des rayons lumineux qui parviennent sur la face 10 du miroir 1 sont réfléchis en direction du miroir 2, puis réfléchis à nouveau par la face 20 de ce dernier en direction de l'ouverture 13 du miroir 1.

Dans le mode de réalisation de l'invention qui est décrit en détail, le support 3 comprend les parties suivantes : une couronne externe 30 et une couronne intermédiaire 31 qui entourent le bord périphérique 21 du miroir secondaire 2, trois pieds référencés 34a-34c, trois paires de jambes 35a-35f, et six jonctions 36a-36f qui connectent rigidement les extrémités supérieures des jambes une-à-une à la couronne externe 30. De préférence, le support 3 est constitué d'une seule pièce, en un matériau homogène qui peut être identique à celui du miroir primaire 1, par exemple en aluminium RSA. A-A désigne l'axe de symétrie par révolution de la couronne externe 30, perpendiculaire à cette dernière. Dans le mode de réalisation qui est décrit ici, l'axe A-A est en confondu avec les axes optiques des miroirs 1 et 2.

Les trois pieds 34a-34c peuvent être écartés deux-à-deux autour de l'axe A-A avec des angles de séparation qui sont chacun compris entre 110° et 130° inclus. Chaque pied 34a-34c peut être tubulaire avec un axe de révolution qui est parallèle à l'axe A-A. La paire de jambes 35a-35b relie le pied 34a à la couronne extérieure 30, avec les jonctions 36a et 36b qui connectent chacune à la couronne extérieure 30 l'extrémité de la jambe 35a ou 35b qui est opposée au pied 34a. De même, la paire de jambes 35c-35d relie le pied 34b à la couronne extérieure 30, avec les jonctions 36c et 36d qui connectent chacune à la couronne extérieure 30 l'extrémité de la jambe 35c ou 35d qui est opposée au pied 34b. Enfin, la paire de jambes 35e-35f relie le pied 34c à la couronne extérieure 30, avec les jonctions 36e et 36f qui connectent chacune à la couronne extérieure 30 l'extrémité de la jambe 35e ou 35f qui est opposée au pied 34c. Les six jonctions 36a-36f peuvent être réparties angulairement sur la couronne extérieure 30, avec des écarts angulaires qui sont compris entre 50° et 70° environ, entre deux jonctions voisines. Toutefois, l'écart angulaire entre deux jonctions voisines qui connectent des jambes d'une même paire peut être supérieur à l'écart entre deux jonctions voisines qui connectent des jambes appartenant à deux paires différentes. Les jambes d'une même paire sont de préférence symétriques entre elles par rapport à un plan méridien qui contient l'axe A-A et l'axe de révolution du pied correspondant à cette paire. Les jambes de paires différentes peuvent être identiques.

Chaque pied 34a (respectivement 34b, 34c) du support 3 est relié au miroir 1 par une connexion rigide qui peut comprendre un goujon 4a (resp. 4b, 4c) et un écrou 5a (resp. 5b, 5c). Le goujon 4a (resp. 4b, 4c) possède une extrémité supérieure 41a (resp. 41b, 41c) munie d'un pas de vis, qui est enfilée dans le pied 34a (resp. 34b, 34c) du support et bloquée par l'écrou 5a (resp. 5b, 5c). Le goujon 4a (resp. 4b, 4c) possède une longueur suffisante pour traverser le miroir primaire 1, de sorte qu'une extrémité inférieure 42a (resp. 42b, 42c) du goujon déborde au-delà de la surface postérieure 11 du miroir primaire 1. Ces extrémités 42a-42c, qui sont solidaires de l'ensemble du télescope 100 lorsque celui-ci est assemblé, permettent de le fixer sur une embase extérieure (non représentée). Ainsi, les extrémités 42a-42c constituent des portions de fixation du télescope 100, et l'axe de révolution de chaque pied 34a (resp. 34b, 34c), qui est confondu avec l'axe longitudinal du goujon 4a (resp. 4b, 4c) correspondant, constitue la direction de liaison du support 3 à cette portion de fixation.

Chaque goujon 4a (resp. 4b, 4c) est en outre connecté rigidement au miroir primaire 1, par la surface latérale du goujon dans un segment de longueur qui est limité entre ses extrémités 41a (resp. 41b, 41c) et 42a (resp. 42b, 42c).

Or des contraintes en tilt peuvent résulter de la fixation du support 3 sur chaque goujon 4a-4c, au niveau des pieds 34a-34c, et/ou résulter de la fixation des extrémités inférieures 42a-42c des goujons 4a-4c sur une embase du télescope 100. De telles contraintes sont susceptibles de provoquer des déformations de la surface antérieure 10 du miroir primaire 1. Pour réduire ces déformations, le miroir primaire 1 peut être pourvu d'une structure solide de cardan à proximité de sa face postérieure 11, autour de chaque goujon 4a-4c. Une telle structure de cardan, ou cardan à déformation solide, ci-après cardan, comprend un étage interne qui entoure le goujon correspondant en étant collé à celui-ci, un étage intermédiaire, et un étage externe qui est solidaire du miroir primaire 1. L'étage interne et l'étage intermédiaire d'un même cardan sont connectés par deux ponts solides qui sont opposés de part et d'autre de l'axe du goujon. De même, deux autres ponts solides et opposés autour du goujon connectent l'étage intermédiaire à l'étage externe. En outre, les deux ponts entre les étages interne et intermédiaire sont de préférence à 90° des ponts entre les étages intermédiaire et externe. Ainsi, un tilt de chaque goujon dans une orientation quelconque est accommodé par des déformations des ponts, sans produire de contraintes à distance au sein du miroir primaire 1, en s'éloignant selon des directions radiales à partir de chaque cardan. Le miroir primaire 1 est ainsi pourvu de trois cardans, un pour chaque pied 34a-34c du support 3. Chaque cardan peut être réalisé par un usinage approprié du miroir primaire 1, éventuellement en effectuant plusieurs reprises d'usinage avec des tolérances dimensionnelles successives qui sont décroissantes. De cette façon, chaque cardan est partie intégrante du miroir primaire 1.

En outre, dans le miroir primaire 1 et au niveau de chaque cardan, une fente 7a-7c peut séparer avantageusement le cardan d'une partie du miroir qui est proche de sa surface antérieure 10. Une telle fente 7a-7c peut s'étendre radialement plus loin que l'étage externe du cardan, à partir du goujon 4a-4c. Elle permet d'éviter que des contraintes qui sont produites par la déformation du cardan, ne s'étendent jusqu'à la face antérieure 10 du miroir primaire 1. Ainsi, cette surface 10 ne subit presqu'aucune déformation statique même lorsque les goujons présentent des valeurs non nulles de tilt.

L'assemblage du support 3 avec le miroir primaire 1 comprend alors les étapes successives suivantes : les goujons 4a-4c sont d'abord collés à l'intérieur de l'étage interne de chaque cardan, puis le support 3 est enfilé par les pieds 34a-34c sur les extrémités supérieures 41a-41c des goujons, et les écrous 5a-5c sont serrés sur les extrémités supérieures 41a-41c.

Pour un support 3 conforme aux figures, et dont l'écartement entre l'axe de chacun des pieds 34a-34c et l'axe A-A est d'environ 78 mm (millimètre), la fréquence la plus basse des modes propres de déformation par vibration du support peut être supérieure à 800 Hz, tandis que celle du miroir primaire 1 peut être de l'ordre de 620 Hz. Ces valeurs assurent que l'amplitude des vibrations à des fréquences qui sont inférieures à 100 Hz soient très faibles.

La connexion entre le support 3 et le miroir secondaire 2 peut être conçue pour réduire des déformations de ce miroir 2 que pourraient provoquer des contraintes transmises par le support 3. Pour cela, la couronne intermédiaire 31 peut avantageusement être située entre la couronne extérieure 30 et le bord périphérique 21 du miroir secondaire 2, avec une configuration concentrique pour les couronnes 30 et 31 par rapport au bord périphérique 21. Les couronnes 30 et 31 peuvent être séparées par un évidement intermédiaire continu en dehors de trois ponts 32a-32c qui peuvent être séparés de 120° autour du miroir secondaire 2. Les trois ponts 32a-32c relient rigidement la couronne intermédiaire 31 à la couronne extérieure 30, et ont chacun une section restreinte pour leur permettre de se déformer dès que des contraintes sont présentes, même de faible intensité. Pour tenir compte de déformations statiques du support 3 qui pourraient être causées par l'assemblage de ce dernier avec le miroir primaire 1, le support 3 peut d'abord être fixé définitivement sur le miroir primaire 1 comme décrit précédemment, puis la couronne intermédiaire 31 peut être usinée avec la précision désirée.

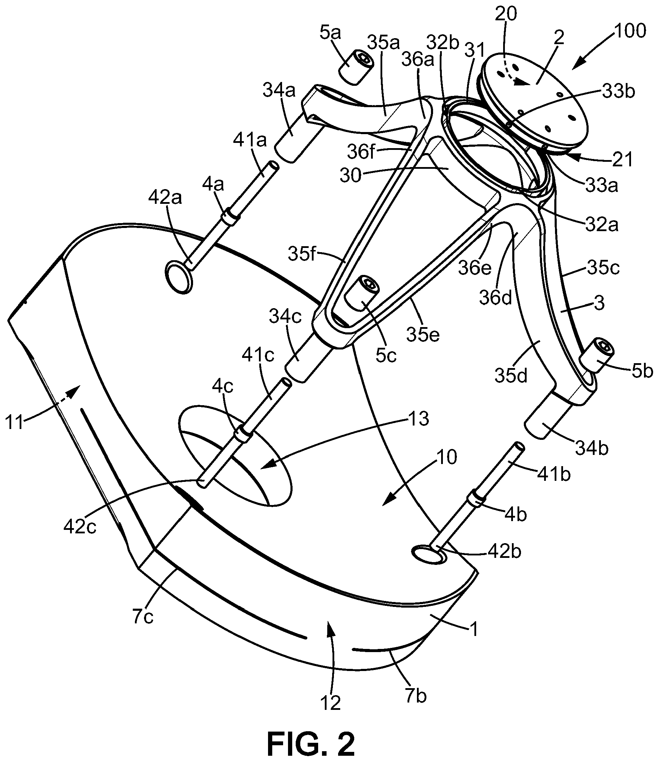

La couronne intermédiaire 31 peut alors être connectée au bord périphérique 20 du miroir secondaire 2 en six points de connexion qui sont répartis par paires : deux points de connexion disposés symétriquement de part et d'autre de chacun des ponts 32a-32c. Par exemple, chaque point de connexion d'une paire peut être séparé angulairement de 43° le long de la couronne intermédiaire 31 par rapport au pont central pour cette paire. Dans des modes d'assemblage préférés du télescope 100, chaque point de connexion peut être un point de collage du miroir secondaire 2 sur le support 3, à l'intérieur de la couronne intermédiaire 31. Les points de connexion 33a et 33b sont visibles sur la Figure 2 de part et d'autre du pont 32a.

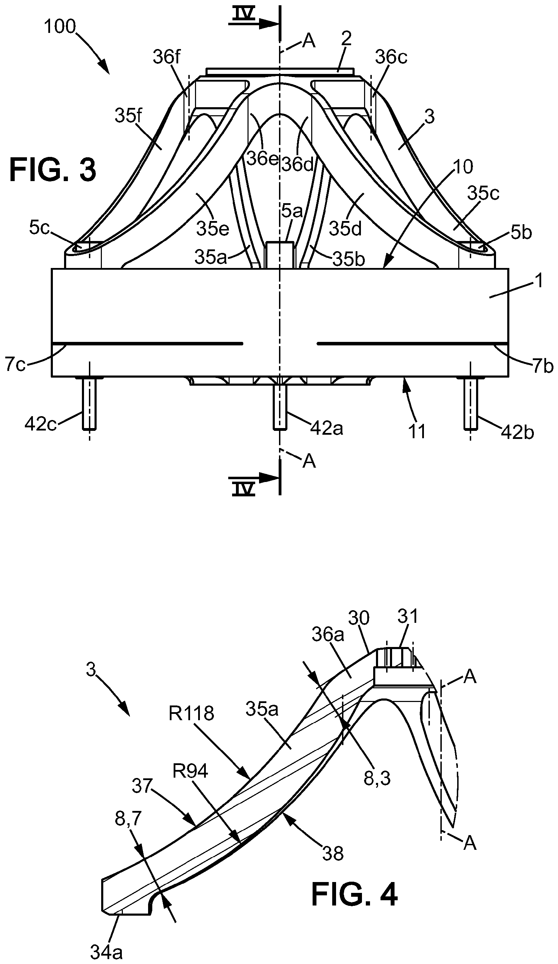

Le miroir secondaire 2 étant plus petit que le miroir primaire 1, chaque jambe 35a-35f est inclinée au dessus d'une partie de la surface antérieure 10 du miroir primaire 1. Selon la présente invention, chacune des jambes 35a-35f est courbe avec un centre de courbure qui est situé d'un côté de cette jambe qui est opposé à la zone centrale du miroir primaire 1, c'est-à-dire du côté de la jambe opposé à l'ouverture centrale 13. Autrement dit, chacune des jambes 35a-35f possède une concavité qui est tournée à l'opposé de l'ouverture 13 du miroir primaire 1. En outre, l'orientation de la concavité qui est associée à la courbure de chaque jambe 35a-35f est constante le long de cette jambe, à tous les niveaux de cette même jambe qui sont intermédiaires entre le pied 34a-34c auquel aboutit cette jambe et la jonction 36a-36f qui connecte cette même jambe à la couronne externe 30. En d'autres termes, le centre de courbure de chacune des jambes 35a-35f, à un niveau quelconque tout le long de celle-ci, est toujours situé du même côté de cette jambe, c'est-à-dire du côté de la jambe qui est opposé à la zone centrale du miroir primaire 1, c'est-à-dire encore du côté de la jambe opposé à l'ouverture centrale 13. Ainsi, chaque jambe 35a-35f possède une arête convexe 38 (Figure 4) qui est en vis-à-vis de la face antérieure 10 du miroir primaire 1, cette arête convexe 38 étant en outre inclinée par rapport à la surface antérieure 10 afin que le support 3 maintienne le miroir secondaire 2 à distance de la surface 10. L'arête de chaque jambe 35a-35f qui est tournée à l'opposé de l'ouverture 13 du miroir primaire 1, est concave et référencée 37. Grâce à une telle orientation de la courbure des jambes 35a-35f, l'amplitude des inclinaisons en sens opposés des miroirs 1 et 2 que provoquent des déformations dynamiques, est réduite. Des logiciels connus de l'Homme du métier, pour modéliser des contraintes dans des pièces mécaniques, peuvent alors être utilisés afin de déterminer des valeurs pour les rayons de courbure respectifs des arêtes 37 et 38, qui minimisent l'amplitude des inclinaisons en sens opposés des miroirs 1 et 2. Par exemple, le rayon de courbure de l'arête convexe 38 de chaque jambe 35a-35f peut être égal à 94 mm, et le rayon de courbure de l'arête concave 37 peut être égal à 118 mm. Simultanément, l'épaisseur de chacune des jambes 35a-35f au niveau de sa jonction avec la couronne extérieure 30, peut être égale à 8.3 mm. Dans ces conditions, l'amplitude des inclinaisons en sens opposés des miroirs 1 et 2 que provoquent des déformations dynamiques, est divisée d'un facteur deux par rapport au cas de jambes de même longueur mais rectilignes, pour une même amplitude de vibration externe à une fréquence comprise entre 30 Hz et 40°Hz, pouvant être transmise par un véhicule sur lequel le télescope est monté.

Il est entendu que l'invention peut être reproduite en adaptant certains de ses aspects secondaires par rapport à la description détaillée fournie ci-dessus, tout en conservant certains au moins des avantages qui ont été cités. En particulier, l'utilisation du télescope à bord d'un hélicoptère n'est pas limitative, et de nombreuses autres utilisations peuvent bénéficier des avantages d'un télescope qui est conforme à la présente invention.

## Revendications

1. Télescope (100) à faibles déformations, comprenant :
- un miroir primaire (1) ;
- un miroir secondaire (2) plus petit que le miroir primaire ; et
- un support (3) assemblé rigidement au miroir primaire (1) et au miroir secondaire (2) de façon à maintenir rigidement ledit miroir secondaire en avant d'une zone centrale dudit miroir primaire, avec des faces réfléchissantes (10, 20) respectives des deux miroirs primaire et secondaire qui sont tournées l'une vers l'autre,
le support comprenant :
- trois pieds (34a-34c) reliés rigidement au miroir primaire (1) en dehors de la zone centrale dudit miroir primaire, les trois pieds étant répartis angulairement autour de ladite zone centrale ;
- une couronne externe (30) reliée au miroir secondaire (2), et ayant un axe de symétrie par rotation (A-A) perpendiculaire à ladite couronne externe ;
- au moins trois jambes (35a-35f) aboutissant chacune à l'un des trois pieds (34a-34c), et chacune inclinée par rapport à l'axe (A-A) de la couronne externe (30) ; et
- au moins trois jonctions (36a-36f) séparées angulairement le long de la couronne externe (30), et connectant chacune rigidement ladite couronne externe à une extrémité supérieure d'une des jambes (35a-35f), opposée au pied (34a-34c) auquel aboutit ladite jambe,
le télescope (100) étant **caractérisé en ce que** chaque jambe (35a-35f) possède une courbure non nulle, orientée de sorte qu'une concavité de ladite jambe soit tournée à l'opposé de la zone centrale du miroir primaire (1).

2. Télescope selon la revendication 1, dans lequel le support (3) est formé en une pièce unique constituée d'un seul matériau solide et continu entre les pieds (34a-34c), les jambes (35a-35f), les jonctions (36a-36f) et la couronne externe (30).

3. Télescope selon la revendication 1 ou 2, dans lequel chaque jambe (35a-35f) possède une section transversale qui diminue à partir d'une zone de ladite jambe proche du pied (34a-34c) auquel aboutit ladite jambe, en direction de la jonction (36a-36f) qui connecte ladite jambe à la couronne externe (30).

4. Télescope selon la revendication 3, dans lequel la section transversale de chaque jambe (35a-35f) diminue entre la zone proche du pied (34a-24c) auquel aboutit ladite jambe et la jonction (36a-36f) qui connecte ladite jambe à la couronne externe (30), de sorte qu'une contrainte existant dans ladite section transversale soit constante pour des niveaux de section transversale variables entre ladite zone proche du pied et ladite jonction à la couronne externe.

5. Télescope selon la revendication 3 ou 4, dans lequel chaque jambe (35a-35f) possède une épaisseur constante entre la zone proche du pied (34a-34c) auquel aboutit ladite jambe et la jonction (36a-36f) qui connecte ladite jambe à la couronne externe (30).

6. Télescope selon l'une quelconque des revendications précédentes, dans lequel les trois jambes (35a-35f) sont séparées angulairement deux-à-deux autour de l'axe (A-A) de la couronne externe (30), avec des angles de séparation compris entre 100° et 140° autour dudit axe.

7. Télescope selon l'une quelconque des revendications précédentes, dans lequel le support (3) comprend :
- six jambes (35a-35f) aboutissant par paires à chacun des trois pieds (34a-34c) ; et
- six jonctions (36a-36f) séparées angulairement le long de la couronne externe (30), et connectant chacune rigidement ladite couronne externe à l'extrémité supérieure d'une des six jambes (35a-35f), opposée au pied (34a-34c) auquel aboutit ladite jambe.

8. Télescope selon l'une quelconque des revendications précédentes, dans lequel chaque jambe (35a-35f) possède un rayon de courbure moyen compris entre 80 mm et 140 mm.

9. Télescope selon la revendication 8, dans lequel une arête supérieure (37) de chaque jambe (35a-35f), qui est tournée à l'opposé de la zone centrale du miroir primaire (1), possède un rayon de courbure compris entre 100 mm et 140 mm, et une arête inférieure (38) de chaque jambe, qui est tournée vers ladite zone centrale du miroir primaire, possède un rayon de courbure compris entre 80 mm et 110 mm.

10. Télescope selon l'une quelconque des revendications précédentes, dans lequel l'orientation de la concavité associée à la courbure de chaque jambe (35a-35f) est constante le long de ladite jambe.

## Patentansprüche

1. Teleskop (100) mit geringen Verformungen, das Folgendes umfasst:
- einen Primärspiegel (1);
- einen Sekundärspiegel (2), der kleiner als der Primärspiegel ist; und
- einen Träger (3), der mit dem Primärspiegel (1) und mit dem Sekundärspiegel (2) starr zusammengefügt ist, derart, dass der Sekundärspiegel vor einer Mittelzone des Primärspiegels starr gehalten wird, wobei jeweilige reflektierende Flächen (10, 20) des Primärspiegels und des Sekundärspiegels einander zugewandt sind,
wobei der Träger Folgendes umfasst:
- drei Füße (34a-34c), die mit dem Primärspiegel (1) außerhalb der Mittelzone des Primärspiegels starr verbunden sind, wobei die drei Füße in Winkelrichtung um die Mittelzone verteilt sind;
- einen äußeren Kranz (30), der mit dem Sekundärspiegel (2) verbunden ist und eine Rotationssymmetrieachse (A-A) besitzt, die zu dem äußeren Kranz senkrecht ist;
- wenigstens drei Schenkel (35a-35f), die jeweils an einen der drei Füße (34a-34c) anstoßen und jeweils in Bezug auf die Achse (A-A) des äußeren Kranzes (30) geneigt sind; und
- wenigstens drei Verbindungen (36a-36f), die in Winkelrichtung längs des äußeren Kranzes (30) getrennt sind und jeweils den äußeren Kranz mit einem oberen Ende eines der Schenkel (35a-35f) gegenüber dem Fuß (34a-34c), an den der Schenkel anstößt, starr verbinden,
wobei das Teleskop (100) **dadurch gekennzeichnet ist, dass** jeder Schenkel (35a-35f) eine von null verschiedene Krümmung besitzt, die in der Weise orientiert ist, dass eine Konkavität des Schenkels der Mittelzone des Primärspiegels (1) zugewandt ist.

2. Teleskop nach Anspruch 1, wobei der Träger (3) aus einem einzigen Teil geformt ist, das aus einem einzigen Festkörpermaterial gebildet ist und zwischen den Füßen (34a-34c), den Schenkeln (35a-35f), den Verbindungen (36a-36f) und dem äußeren Kranz (30) verlängert ist.

3. Teleskop nach Anspruch 1 oder 2, wobei jeder Schenkel (35a-35f) einen Querschnitt besitzt, der ausgehend von einer Zone des Schenkels in der Nähe des Fußes (34a-34c), an dem der Schenkel anstößt, in Richtung der Verbindung (36a-36f), die den Schenkel mit dem äußeren Kranz (30) verbindet, abnimmt.

4. Teleskop nach Anspruch 3, wobei der Querschnitt jedes Schenkels (35a-35f) zwischen der nahen Zone des Fußes (34a-34c), an die der Schenkel anstößt, und der Verbindung (36a-36f), die den Schenkel mit dem äußeren Kranz (30) verbindet, abnimmt, derart, dass eine Beanspruchung, die in dem Querschnitt vorhanden ist, für veränderliche Querschnittsniveaus zwischen der nahen Zone des Fußes und der Verbindung mit dem äußeren Kranz konstant ist.

5. Teleskop nach Anspruch 3 oder 4, wobei jeder Schenkel (35a-35f) eine konstante Dicke zwischen der nahen Zone des Fußes (34a-34c), an die der Schenkel anstößt, und der Verbindung (36a-36f), die den Schenkel mit dem äußeren Kranz (30) verbindet, besitzt.

6. Teleskop nach einem der vorhergehenden Ansprüche, wobei die drei Schenkel (35a-35f) in Winkelrichtung um die Achse (A-A) des äußeren Kranzes paarweise getrennt sind, wobei die Trennungswinkel im Bereich von 100° bis 140° um die Achse liegen.

7. Teleskop nach einem der vorhergehenden Ansprüche, wobei der Träger (3) Folgendes umfasst:
- sechs Schenkel (35a-35f), die paarweise an jedem der drei Füße (34a-34c) anstoßen; und
- sechs Verbindungen (36a-36f), die in Winkelrichtung längs des äußeren Kranzes (30) getrennt sind und jeweils den äußeren Kranz mit dem oberen Ende eines der sechs Schenkel (35a-35f) gegenüber dem Fuß (34a-34c), an dem der Schenkel anstößt, starr verbindet.

8. Teleskop nach einem der vorhergehenden Ansprüche, wobei jeder Schenkel (35a-35f) einen mittleren Krümmungsradius im Bereich von 80 mm bis 140 mm besitzt.

9. Teleskop nach Anspruch 8, wobei eine obere Kante (37) jedes Schenkels (35a-35f), die der Mittelzone des Primärspiegels (1) zugewandt ist, einen Krümmungsradius im Bereich von 100 mm bis 140 mm besitzt und eine untere Kante (38) jedes Schenkels, die der Mittelzone des Primärspiegels zugewandt ist, einen Krümmungsradius im Bereich von 80 mm bis 110 mm besitzt.

10. Teleskop nach einem der vorhergehenden Ansprüche, wobei die Orientierung der Konkavität, die der Krümmung jedes Schenkels (35a-35f) zugeordnet ist, längs des Schenkels konstant ist.

## Claims

1. Low-deformation telescope (100) comprising:
- a primary mirror (1);
- a secondary mirror (2) smaller than the primary mirror; and
- a support (3) rigidly assembled with the primary mirror (1) and secondary mirror (2) so as to hold said secondary mirror rigidly in front of a central zone of said primary mirror, with respective reflecting faces (10, 20) of both primary and secondary mirrors directed towards one another,
the support comprising:
- three feet (34a-34c) rigidly connected to the primary mirror (1) outside of the central zone of said primary mirror, the three feet being angularly distributed around said central zone;
- an outer ring (30) connected to the secondary mirror (2) and having an axis of symmetry by rotation (A-A) which is perpendicular to said outer ring;
- at least three legs (35a-35f), each terminating at one of the three feet (34a-34c) and each inclined with respect to the axis (A-A) of the outer ring (30); and
- at least three junctions (36a-36f) angularly spaced apart along the outer ring (30) and each rigidly connecting said outer ring to a top end of one of the legs (35a-35f) opposite the foot (34a-34c) at which said leg terminates,
the telescope (100) being **characterized in that** each leg (35a-35f) has a curvature that is not zero, oriented so that a concavity of said leg is directed away from the central zone of the primary mirror (1).

2. Telescope as claimed in claim 1, wherein the support (3) is formed as a single piece from a single solid and continuous material between the feet (34a-34c), legs (35a-35f), junctions (36a-36f) and outer ring (30).

3. Telescope as claimed in claim 1 or 2, wherein each leg (35a-35f) has a cross-section which becomes smaller starting from a region of said leg close to the foot (34a-34c) at which said leg terminates, in the direction towards the junction (36a-36f) connecting said leg to the outer ring (30).

4. Telescope as claimed in claim 3, wherein the cross-section of each leg (35a-35f) becomes smaller between the region close to the foot (34a-34c) at which said leg terminates and the junction (36a-36f) connecting said leg to the outer ring (30), so that a stress occurring in said cross-section is constant for variable levels of cross-section between said region close to the foot and said junction to the outer ring.

5. Telescope as claimed in claim 3 or 4, wherein each leg (35a-35f) has a constant thickness between the region close to the foot (34a-34c) at which said leg terminates and the junction (36a-36f) connecting said leg to the outer ring (30).

6. Telescope as claimed in any one of the preceding claims, wherein the three legs (35a-35f) are angularly spaced two by two about the axis (A-A) of the outer ring (30), with spacing angles of between 100° and 140° about said axis.

7. Telescope as claimed in any one of the preceding claims, wherein the support (3) comprises:
- six legs (35a-35f) terminating in pairs at each of the three feet (34a-34c); and
- six junctions (36a-36f) angularly spaced apart along the outer ring (30) and each rigidly connecting said outer ring to the top end of one of the six legs (35a-35f) opposite the foot (34a-34c) at which said leg terminates.

8. Telescope as claimed in any one of the preceding claims, wherein each leg (35a-35f) has a mean radius of curvature of between 80 mm and 140 mm.

9. Telescope as claimed in claim 8, wherein a top edge (37) of each leg (35a-35f) which is directed away from the central zone of the primary mirror (1) has a radius of curvature of between 100 mm and 140 mm, and a bottom edge (38) of each leg which is directed towards said central zone of the primary mirror has a radius of curvature of between 80 mm and 110 mm.

10. Telescope as claimed in any one of the preceding claims, wherein the orientation of the concavity associated with the curvature of each leg (35a-35f) is constant along said leg.
